Europäisches Patentamt

European Patent Office

Office européen des brevets

(11) Veröffentlichungsnummer: **0 414 927 A1**

# EUROPÄISCHE PATENTANMELDUNG

(21) Anmeldenummer: **89115848.7**

(51) Int. Cl.⁵: **H02K 3/24**

(22) Anmeldetag: **28.08.89**

(43) Veröffentlichungstag der Anmeldung:
**06.03.91 Patentblatt 91/10**

(84) Benannte Vertragsstaaten:
**AT CH DE IT LI SE**

(71) Anmelder: **Siemens Aktiengesellschaft**
**Wittelsbacherplatz 2**
**W-8000 München 2(DE)**

(72) Erfinder: **Spirk, Franz**
**Schuckertdamm 322**
**W-1000 Berlin 13(DE)**

(54) **Flüssigkeitsgekühlte Ständerwicklung für eine elektrische Antriebsmaschine.**

(57) Es handelt sich um eine Flüssigkeitsgekühlte Ständerwicklung für eine elektrische Antriebsmaschine, insbesondere einen Außenläufermotor, mit Spulenwicklungen, die eine oder mehrere Windungen aufweisen, wobei zumindest die äußerste Lage der Spulenwicklung (1) als Hohlwindung (4, 8) zur Aufnahme einer Kühlflüssigkeit ausgebildet, nicht stromführend und galvanisch vom stromführenden Teil der Spulenwicklung (1) getrennt ist.

FIG 1

Öl o. Wasser

## FLÜSSIGKEITSGEKÜHLTE STÄNDERWICKLUNG FÜR EINE ELEKTRISCHE ANTRIEBSMASCHINE

Die Erfindung betrifft eine flüssigkeitsgekühlte Ständerwicklung für eine elektrische Antriebsmaschine, insbesondere einen Außenläufermotor, mit Spulenwicklungen, die eine oder mehrere Windungen aufweisen.

Flüssigkeitsgekühlte Ständerwicklungen für elektrische Maschinen sind bereits bekannt, insbesondere bei Generatoren mit Gitterstäben und hohen elektrischen Spannungen.

Bei den bekannten flüssigkeitsgekühlten Wicklungen wird entionisiertes, von allen Fremdstoffen gereinigtes Wasser mit sehr geringer elektrischer Leitfähigkeit verwendet. Einzelne Teilleiter der Wicklung sind als Hohlleiter ausgeführt, so daß das Wasser die Spannung führenden Teile direkt kühlt.

Es ist Aufgabe der Erfindung, eine allgemein einsetzbare Kühlung für die Spulenwicklungen einer elektrischen Arbeitsmaschine mit geringer elektrischer Spannung, z.B. kleiner als 3 kV, anzugeben, die bei geringem Antriebsenergie- und Raumbedarf konstruktiv einfach ausgeführt ist, mit hoher Betriebssicherheit arbeitet und keine speziell aufbereitete Kühlflüssigkeit benötigt.

Die Aufgabe wird dadurch gelöst, daß zumindest die äußerste Lage der Spulenwicklung als Hohlwindung zur Aufnahme einer Kühlflüssigkeit ausgebildet, nicht stromführend und galvanisch vom stromführenden Teil der Spulenwicklung getrennt ist. Hierdurch ergibt sich eine vorteilhaft einfache Ausbildung der Spulenkühlung mit geringem Platzbedarf und einfacher Montierbarkeit bei Verwendung eines leitenden Kühlmittels. Der Betrieb ist vorteilhaft mit nur mechanisch gereinigtem, insbesondere gefiltertem, Leitungswasser, vorzugsweise aus dem Betriebsnetz, möglich. So ist eine Frischwasserkühlung möglich, die keine besonderen Wasseraufbereitungsmaßnahmen erfordert. Eine derartige Kühlung ist daher insbesondere im Bergbau vorteilhaft.

In Ausgestaltung der Erfindung ist vorgesehen, daß die, die Kühlflüssigkeit führende Hohlwindung aus Kunststoff, insbesondere aus Polytetrafluoräthylen besteht. Polytetrafluoräthylen (Handelsname: Teflon) weist eine besonders glatte und dichte Oberfläche auf, so daß Ablagerungen von im Wasser mitgeführten Bestandteilen nicht zu befürchten sind. Darüber hinaus ist dichter Kunststoff und insbesondere Polytetrafluoräthylen, ein guter elektrischer Isolator. So wird einfach eine vollständige galvanische Trennung des Kühlwassers vom stromführenden Teil der Spulenwicklung erreicht. Ein gesonderter, isolierter Anschluß an die Verteil- und Sammelrohre des Kühlwassers entfällt. Entsprechend einfach und betriebssicher kann der Aufbau der erfindungsgemäßen Kühlung ausgebildet werden.

Durch eine Anordnung innerhalb der Spulenhauptisolation kann darüber hinaus auch eine Isolation gegenüber der Umgebung erreicht werden, so daß es vorteilhaft möglich ist, die übrigen Teile des elektrischen Antriebs oder eines entsprechend aufgebauten Generators, mit Luft, auch mit feuchter Grubenluft zu kühlen. Auch bei den übrigen Teilen der Maschine brauchen daher keine kostenaufwendigen, besonderen Maßnahmen getroffen zu werden.

Weitere Vorteile und Einzelheiten der Erfindung ergeben sich aus der nachfolgenden Beschreibung eines Ausführungsbeispieles anhand der Zeichnung und in Verbindung mit den Unteransprüchen. Es zeigt:

FIG 1 eine erfindungsgemäß gekühlte Spulenwicklung,

FIG 2 einen Schnitt durch eine Kühlkanalanordnung entsprechend FIG 1 und

FIG 3 einen Schnitt durch eine Kühlkanalanordnung mit mittigem Kühlkanalverlauf.

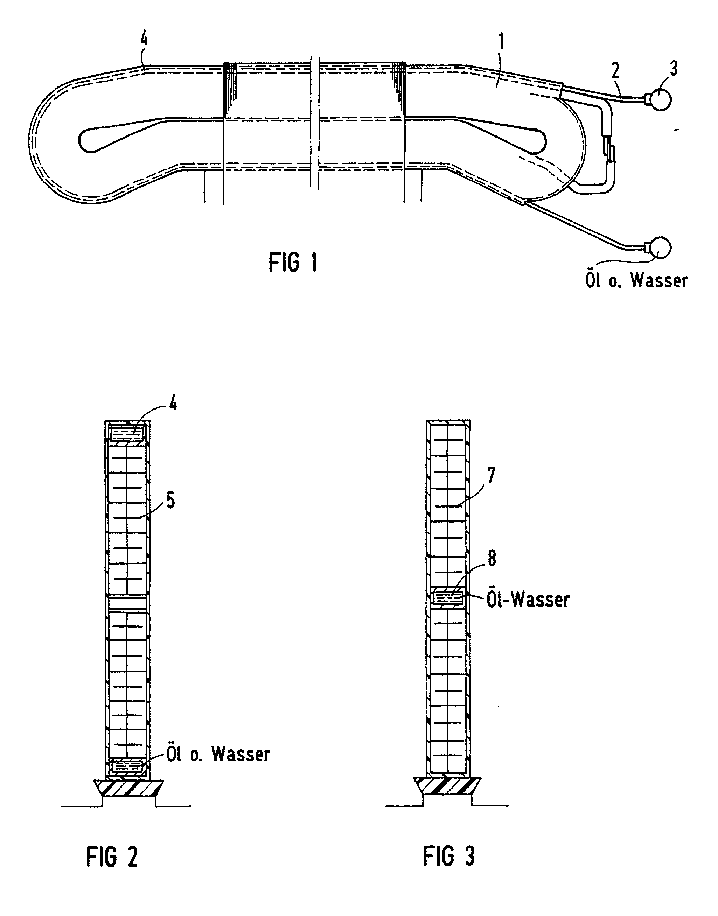

In FIG 1 bezeichnet 1 eine erfindungsgemäß gekühlte Wicklung, die mit Zuleitungsorganen 2 und 3 für das Kühlwasser, eventuell auch Kühlöl, verbunden ist. Wie sich aus den FIG 2 und 3 ergibt, können die Kühlkanäle 4 und 8 sowohl außen und innen als auch in der Mitte der Wicklung 1 angeordnet werden. Das in den Kühlkanälen 4 fließende Wasser oder Öl ist mit 6 bezeichnet, während 5 die angedeuteten Lagen zwischen den einzelnen Windungen der Wicklung bezeichnet.

Die vorstehende Kühlung ist speziell für den Einsatz im untertägigen Bergbau entwickelt worden, es versteht sich jedoch von selbst, daß eine derartige Kühlung auch für elektrische Maschinen in Arbeitsgebieten mit ähnlichen Problemen vorteilhaft sein kann.

## Ansprüche

1. Flüssigkeitsgekühlte Ständerwicklung für eine elektrische Antriebsmaschine, insbesondere einen Außenläufermotor, mit Spulenwicklungen, die eine oder mehrere Windungen aufweisen, **dadurch gekennzeichnet**, daß zumindest die äußerste Lage der Spulenwicklung (1) als Hohlwindung (4,8) zur Aufnahme einer Kühlflüssigkeit ausgebildet, nicht stromführend und galvanisch vom stromführenden Teil der Spulenwicklung getrennt ist.

2. Flüssigkeitsgekühlte Ständerwicklung nach Anspruch 1, **dadurch gekennzeichnet**, daß die Hohlwindung (4,8) aus Kunststoff, insbesondere aus Polytetrafluoräthylen, besteht.

3. Flüssigkeitsgekühlte Ständerwicklung nach Anspruch 1 oder 2, **dadurch gekennzeichnet**, daß die Hohlwindung (4,8) aus Metall, insbesondere aus kunststoffbeschichtetem Metall, besteht.

4. Flüssigkeitsgekühlte Ständerwicklung nach Anspruch 1,2 oder 3, **dadurch gekennzeichnet**, daß die Hohlwindung (4,8) innerhalb der Spulenhauptisolation angeordnet ist.

5. Flüssigkeitsgekühlte Ständerwicklung nach Anspruch 1,2,3 oder 4, **dadurch gekennzeichnet**, daß als Kühlflüssigkeit (6) mechanisch gereinigtes, insbesondere gefiltertes, Leitungswasser, vorzugsweise aus dem Betriebsnetz, verwendet wird.

6. Flüssigkeitsgekühlte Ständerwicklung nach einem oder mehreren der vorhergehenden Ansprüche, **dadurch gekennzeichnet**, daß sie für Antriebsmaschinen im Bergbau verwendet wird.

FIG 1

Öl o. Wasser

FIG 2

Öl o. Wasser

FIG 3

Öl-Wasser

4

Europäisches
Patentamt

**EUROPÄISCHER RECHERCHENBERICHT**

Nummer der Anmeldung

EP    89 11 5848

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | BE-A-526043 (LA S.E.M.)<br>* Seite 6, Zeilen 19 - 27 *<br>* Seite 9, Zeilen 51 - 57 *<br>* Seite 11, Zeile 29 - Seite 12, Zeile 2;<br>Figuren 5, 33, 38-43. * | 1-4. | H02K3/24 |
| Y | | 5, 6. | |
| Y | GB-A-973973 (MAVOR & COULSON)<br>* Seite 1, Zeilen 9 - 13 *<br>* Seite 2, Zeilen 35 - 69; Figuren 1A, 1B. *<br>--- | 5, 6. | |
| X | CH-A-413077 (OERLIKON)<br>* Seite 1, Zeile 25 - Seite 2, Zeile 37; Figuren<br>1-3. *<br>--- | 1-3. | |
| X | US-A-3624432 (MERZ)<br>* Spalte 2, Zeilen 27 - 56 *<br>* Spalte 3, Zeilen 6 - 34 *<br>* Spalte 3, Zeile 71 - Spalte 4, Zeile 26;<br>Figuren 1, 4, 5. *<br>--- | 1-3. | |
| X | DE-A-2515340 (BROWN BOVERI)<br>* Seite 7, Zeilen 9 - 24; Figur 4. *<br>--- | 1-3. | RECHERCHIERTE SACHGEBIETE (Int. Cl.5) |
| X | DE-C-331707 (A.E.G.)<br>* Seite 1, Zeilen 4 - 39; Figuren 1-4. *<br>--- | 1, 3. | H02K |
| A | US-A-2648789 (GEYER)<br>* Spalte 4, Zeilen 10 - 27; Figuren 6, 11. *<br>--- | 1. | |
| E | EP-A-0342554 (MAGNET-MOTOR)<br>* Spalte 4, Zeile 15 - Spalte 5, Zeile 12;<br>Figuren 4, 5. *<br>----- | 1-3. | |

Der vorliegende Recherchenbericht wurde für alle Patentansprüche erstellt

| Recherchenort | Abschlußdatum der Recherche | Prüfer |
|---|---|---|
| DEN HAAG | 22 FEBRUAR 1990 | TIO K.H. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................
& : Mitglied der gleichen Patentfamilie, übereinstimmendes
    Dokument

EPO FORM 1503 03.82 (P0403)